# EUROPEAN PATENT SPECIFICATION

(11) **EP 2 679 122 B1**
(45) Date of publication and mention of the grant of the patent: **04.01.2017**
(21) Application number: 12004866.5
(22) Date of filing: 29.06.2012
(51) Int. Cl.: A47J 43/07

(54) **Blade tool arrangement for a kitchen device**
Klingenwerkzeuganordnung für ein Küchengerät
Agencement d'outil à lame pour dispositif de cuisine

(43) Date of publication of application: 01.01.2014
(73) Proprietor: BSH Hausgeräte GmbH, 81739 München (DE)
(72) Inventor: Pesec, Jurij, 3301Petrovce (SI); Rudez, Darko, 3230 Sentjur (SI); Zilnik, Marko, 1218 Komenda (SI)

(56) References cited:
- FR-A1- 2 608 034
- US-A- 4 307 847
- US-B1- 6 532 863
- US-B1- 8 056 848
- US-B1- 8 132 752

## Description

### BACKGROUND OF THE INVENTION

The present invention relates to a blade tool arrangement for use in machines specifically produced for preparing food - kitchen devices, food processors or similar appliances - in everyday domestic food preparation according to the preamble of claim 1. It further relates to the use of the blade tool arrangement in kitchen devices, food processors or similar appliances according to claim 13.

### PRIOR ART

Cutting blades are widely used in food processors and are in fact a basic tool for processing food in such appliances. The food that is most often processed includes nuts, meat, parsley, onions, parmesan cheese. Quality of processing of these and other food articles, in combination with noise and ease of handling/cleaning, is therefore one of the most important features of these appliances.

The most common form of blades used in kitchen devices and food processors are straight blades that are curved to fit into the confined space of the processing vessel and at the same time maximize the length of the cutting blade. Recently, conventional serrated blades were implemented in various food processors. These serrated blades are more efficient in food processing than traditional straight blades because the effective length of the blade is increased. As a result, each rotation of the cutting blade results in more extensive contact of the blade with the processed food and therefore in faster and more efficient processing. However, conventional serrated blades have two deficiencies that are very inopportune for the use in food processing and also hard to overcome. First is the brittleness resulting from the process of production of conventional serrated blades. They are produced using a technique that involves grinding of each individual tooth of the blade from the starting straight cutting blade form. This results in increased possibility of chipping of small pieces from the blade or even of the blade breaking apart. The second disadvantage is connected to the general property of the cutting blades used in processing food. That property is that they lose sharpness very quickly, generally after only a few cycles of use due to high rotation speeds and high forces during food processing. Although the longer cutting edge of conventional serrated blades results in lower forces applied to the blade during food processing and lower wear of the edge of the blade, the blade still needs to be sharpened or replaced periodically. This further leads to the need for a simple method of sharpening, preferably such that end users can perform the sharpening by themselves. To be able to meet this requirement, the sharpening options are generally limited to the use of a simple grinding tool with a flat grinding surface. With the use of conventional serrated blades this option is not available as sharpening requires the use of specific techniques that allow sharpening of each individual tooth by following the 3-dimensional shape of the serrated blade almost completely. Such sharpening generally requires a dedicated apparatus for sharpening such blades and can't be carried out by the end users or even a trained professional at an outside location.

There are solutions known for the above mentioned problems that have been used in slicing knives. Instead of conventional serrated blades, various forms of wavy blades are used. It is known from previous art as described in the US patent US 5,097,727 (A) that if a cutting edge is determined by a series of circular segments, commonly referred to as a scalloped edge, circular and straight knives provided with such an edge will continue to perform cutting function even after the cutting edge becomes dull because of the presence of multiple cutting edges in the scalloped configuration. Scalloped cutting edges are often provided on straight knife blades, such as bread knives and also on circular knife blades used in commercial slicing machines.

The US Patent US 2,825,968 (A) discloses a knife blade solution that addresses both the problem of brittleness and the problem of easy sharpening. The knife blade is produced in a wavy form by using flat grinding, stamping, rolling or moulding, such that the blade contains a series of end-to-end concave segments. Afterwards, the blade is sharpened by using a flat grinding surface at an acute angle from one or both sides. This results in formation of scalloped cutting edge which is keen over the entire length of every individual scallop. This kind of blade is not subject to the same degree of brittleness as is the case in serrated knives since there are no additional indentations in the blade. Also, the blade can easily be sharpened using a simple flat grinding surface as the surface of the blade from one or both sides is completely flat. This kind of blade not only allows easy sharpening but also has a longer useful life than conventional straight cutting blades. This is believed to be due to the fact that cutting shifts from point to point along each of the concave cutting spans and further to the fact that there is a longer overall length of the blade that interacts with the food and therefore lower forces need be applied.

A method for producing cutting teeth on cutting tools is described in the US patent US 3,741,046 (A). This method includes: first, folding longitudinally of one part of a blade to an angle of less than 15°, secondly, in producing, by stamping a portion of the folded part, a series of substantially identical indentations side by side along the edge of the blade, and, thirdly, in carrying out a planing operation on the face of the folded part of the blade which produces sharp-edged scallops which form the teeth of the cutting tool.

Another method for producing a similar cutting blade is disclosed in the patent US 3,321,874. Similarly, the cutting blade is produced from an elongated flat bar in steps of deforming the edge to provide a plurality of notches and protrusions on each side, forming a corrugated-like edge, grinding the corrugated-like edge at an angle to the plane of the shank on opposite sides to form a cutting edge characterised by a plurality of side-by-side teeth, each tooth having a scallop-like cutting edge portion. In addition, this patent discloses the possibility of using such blades on an apparatus for performing cutting or blanking and like operations on sheet material such as corrugated board.

The French patent FR 2 907 362 (B1) discloses another method of producing a wavy blade as well as an apparatus for producing such a blade and a knife incorporating the blade. This patent discloses a method for producing notches and protrusions by inserting the straight blade between two compatible cutting means with offset concave and convex indentations that stamp regular notches and protrusions in the blade that is inserted. The produced blade is then subject to grinding from one site to produce the final wavy blade with a keen edge. Depending on the form of notches and protrusions, angle and plane of grinding, various forms of wavy blades may be produced. These include both wavy blades with sharp teeth at both ends of each indentation as well as wavy blades with no sharp edges.

Another blade tool arrangement is known from FR2608034.

Regarding the use of similar blades in food processing, the most commonly used are straight cutting blades that are in most cases curved to fit the confined space of the food processing vessel while increasing the length of the blade as much as possible. These blades are not optimal due to the fact that the length of the blade that is interacting with the processed food is not maximised which results in longer processing times and more importantly in the blade being exposed to higher forces and faster degradation compared to blade solution with increased effective blade lengths. There are some examples of the use of a conventional serrated blade in food processing machines but they are subject to the above described problems of brittleness and losing sharpness. To our knowledge, a wavy blade which increases the length of the blade and also addresses the problems of the conventional serrated blades similar to the solution described in this invention has not previously been used in food processing machines.

### OBJECT UNDERLYING THE INVENTION

The object underlying the present invention is to provide an improved blade tool arrangement for the use in kitchen devices, food processors or similar devices that has an increased blade length for faster food processing and less blade degradation.

### SOLUTION ACCORDING TO THE INVENTION

In order to achieve the object underlying the invention, the present invention provides a blade tool arrangement as defined in claim 1.

What is understood by a wavy blade according to this invention is a blade of the design that is either novel or has been previously used in kitchen devices, food processing machines or other similar appliances but has an improved blade design to increase durability of the keen edge, allow the end user to easily re-sharpen the blade, as well as minimize brittleness. This is achieved by modifying the cutting edge of the blade from a straight edge into a wavy edge. The wavy edge is preferably produced by stamping the edge of the blade to provide periodical notches and protrusions and then by grinding the blade with a flat grinding surface, which is described in more detail below. Further, the blade tool arrangement comprises one or more wavy blades and a part including clutch preferably made of plastic or other materials into which the wavy blades are moulded. The latter part allows for the connection of the blades to the clutch of the rotation mechanism of the food processing appliance where it is used. The blade tool arrangement preferably comprises two wavy blades protruding symmetrically from each side of the blade tool arrangement (to provide rotational balance), however, the shape of cutting edges applied and their orientation may differ.

The design of the blade as described above has an advantage of having a planar grindable surface - the one in which the blade is originally sharpened. This allows/enables the end user to easily re-sharpen the cutting edge of the blade if needed. The re-sharpening can be done using simple grinding tools that are generally already available in the kitchen, such as a knife sharpener. This is in contrast with other food processor blade designs that are using serrated blades which require complicated procedures for re-sharpening.

Food processing machines and other similar appliances can include, for example, universal food processing machines, blenders, choppers, compact kitchen machines and all other machines that include a rotating blade for processing food or, for example, ice.

### EMBODIMENTS OF THE INVENTION

According to an embodiment of the invention, the basic form of each blade is such that it is skewed backwards in relation to the direction of rotation and is becoming narrower with increasing distance from the center of rotation. This is beneficial in order for the blade to fit into the confined spaces of the food processing vessel as well as from the reduced weight, material consumption and rotational stability standpoint.

According to the invention, the front portion of the blade which includes the cutting edge is bent to one side from the original plane of the blade by 1 ° - 20° in the width of up to 20 mm, preferably of 3 - 10 mm. This bending on the one hand increases the stability of the blade while on the other hand it allows flexibility in the determination of the final shape of the cutting edge. The selected angles of bending can influence the length and shape of the waves that are formed after grinding.

According to the invention, the grindable surface is at an angle between -12° and 12° in relation to the original plane of the blade. This, in combination with the bending of the front portion of the blade, influences the length and shape of the waves of the cutting edge that are formed after grinding.

Furthermore, the grindable surface can optionally be in a plane parallel but different to the original plane of the blade, the plane of grinding being preferably removed by 0.5 - 4 mm. This also influences the length and shape of the waves of the cutting edge that are formed after grinding. In addition, if the plane of grinding is parallel to the original plane of the blade, the forces resulting from the rotating blade are kept low. If the plane of the grinding is not parallel to the original plane of the blade, the ground plane creates additional downward or upwards forces during rotation upon contact with the processed food which must then be taken into consideration.

It is preferred, that the length-to-depth ratio of the waves, calculated as the ratio of the length of each wave x to the depth of the wave y defined as the distance from the outermost part of the wave to the innermost part of the wave in relation to the curved general axis of each blade is between 3:1 and 20:1, more preferably between 5:1 and 10:1. The length of the waves is preferably between 5 and 10 mm. This length of the waves is preferred since it is believed that shorter legths would result in a blade that would have an increased tendency towards shredding or chopping the processed food instead of slicing it. This conclusion is based on observations of the function of the traditional serrated blades in food processors - these typically have over 100 serrations and the length of the blade is similar. Larger lengths, on the other hand, result in spatial problems regarding how to fit the whole waves onto the ground surface as amplitudes are increasingly higher.

The embodiments according to this invention can include various combinations of any of the following features:
- different length-to-depth ratios (x:y) of the waves in each wing of the blade,
- different widths and angles of bending the front portion of the blade in each blade,
- different angles and planes of grinding in each blade, and/or
- an optional upward or downward orientation of the ground surface in each blade; the blade can either be ground from above or below the blade as positioned in the food processing apparatus. Orientation of the blade results in forces that are created by the rotating blade being directed upwards or downwards which can in some instances be beneficial for the processing of various types of food.

In embodiments according to this invention, the pressing and grinding angles during production are selected in the ranges that result in optimal food processing angles, that is angles at which the cutting edge of the blade contacts the food in the processor, within a continuous range between 10° and 70°. This is the range in which food is typically sliced when performing slicing by hand knives. Cutting at angles below 10° results in poor efficiency of slicing since the blade is essentially gliding by the food and in the food processor setting most likely simply displaces it without cutting. On the other hand, cutting at angles above 70° results in a chopping or shredding action of the blade and requires much higher forces to be applied. These higher forces consequently result in higher wear of the blade as well as in often unwanted excessive chopping and shredding of the food being processed (e.g. parsley).

According to an embodiment of the invention, one or more of the blades include one or more apertures. The advantages of these apertures (depending on the design) are:
- easier positioning of the blade during production or during operation,
- decreased weight of the blade,
- reduced material consumption,
- increased flexibility of the blade,
- modification of hydrodynamic flow,
- increased rotational stability of the blade, including prevention of vibrations.

In embodiments according to this invention, the apertures are positioned completely within the part of the blade that is not bent. The distance between the clutch and the closest edge of the aperture is between 1 and 15 mm. While it is possible to position the apertures in other ways, in order to avoid causing structural instabilities and unwanted hydrodynamic effects as much as possible, the preferred position of the apertures is near the clutch of the blade tool arrangement and in the portion of the blade that has not been bent and is not grinded.

The aperture or apertures cover not more than 15% of the surface area of the blade, again to avoid structural and rotational instabilities and unwanted hydrodynamic effects.

According to an embodiment of the invention, the apertures are either different in number and/or position and/or not all of the same shape in order to allow unambiguous positioning of the blade during production or operation. The apertures can be used as a means of positioning of the blade in the phases of stamping, bending, grinding, as well as during operation. In the case that the blades are not symmetrically arranged in relation to the center of the blade tool arrangement and/or are not of the same design, it is beneficial to use different apertures or different aperture arrangements in each blade to allow unambiguous positioning of the blade.

According to an embodiment of the invention the apertures are of triangular or rectangular design, preferably with rounded edges. The apertures can be of any design, it is however convenient to have simple designs, the edges are preferably rounded to avoid risk of injury for the user as well as do avoid unwanted hydrodynamic effects. Additionally the apertures can be used for handling the blade tool arrangement during production, for instance a production tool (production robot) may hold the tool using the aforementioned apertures.

According to an embodiment of the invention, the blade tool arrangement is intended for processing food in a kitchen device, food processing machine or similar appliance.

### BRIEF DESCRIPTION OF THE DRAWINGS

The invention is explained in more detail below on the basis of an exemplary embodiment and with reference to schematic drawings in which:
FIG. 1: schematically shows a traditional non-serrated blade.
FIG. 2: shows a blade tool arrangement with a wavy blade including the clutch.
FIG. 3: schematically shows length to depth ratios x:y of the waves of a blade.
FIG. 4: shows a schematic of a section of indented blade before grinding including the front portion of the blade (bent portion).
FIG. 5: shows a blade tool arrangement without a clutch after grinding.

### DETAILED DESCRIPTION OF THE INVENTION

Advantageous embodiments and developments which can be used individually or in combination with one another are the subject matter of the dependent claims.

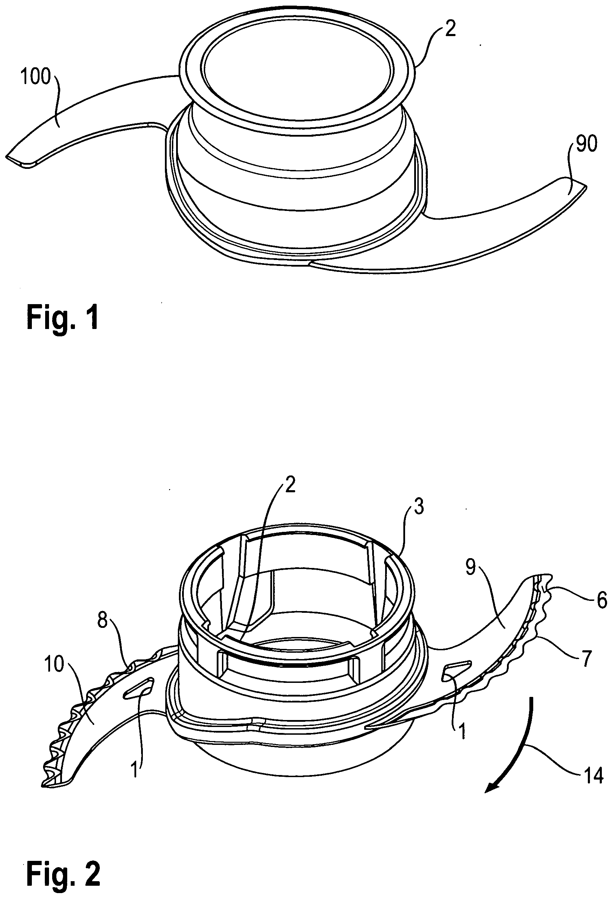

Fig. 1 shows a traditional blade arrangement. The blades 90, 100 are most often of the shape that fits into the confined space of a food processor (not shown) which is generally round to accommodate rotation of the blade and tends to be reasonably small in diameter to allow quality processing of smaller quantities of food. This is accompanied with the desire to achieve a maximum ratio between blade length and diameter of the processor in the cutting area since it is well known that quality of processing largely depends on this ratio. To increase the relative length of the blade, the blades 90, 100 according to this embodiment are preferably skewed backwards in relation to the direction of rotation in a semicircular or parabolic curve. Additionally, the blade 90 preferably becomes narrower as the distance from the center of rotation increases in horizontal, radial direction. This improves the rotational stability of the blade by lowering centrifugal forces.

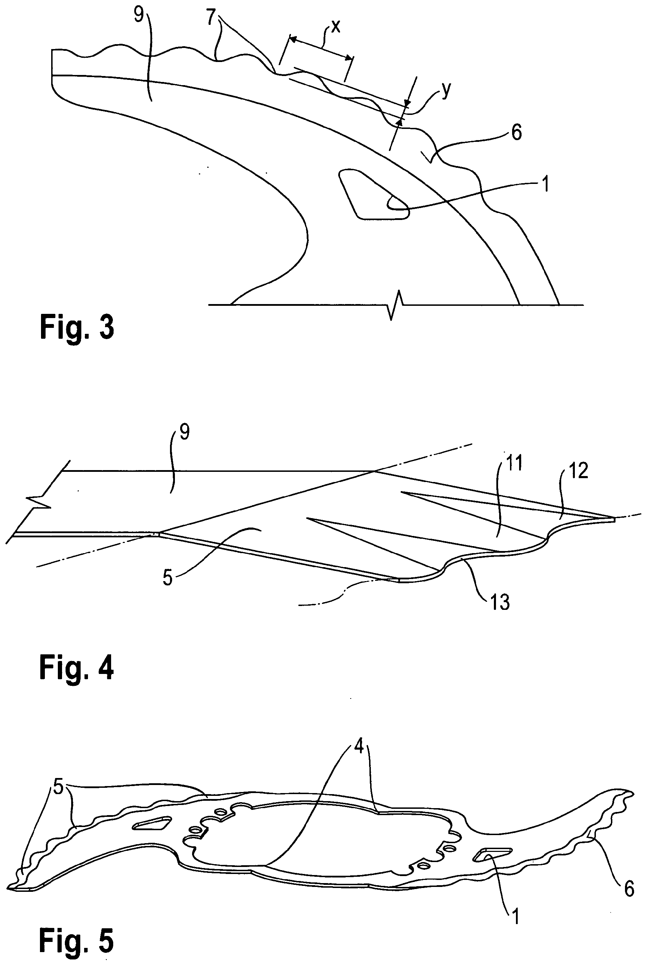

Fig. 2 shows a blade tool arrangement according to the present invention. The blade tool arrangement 3 generally comprises a clutch 2 adapted to couple the blade tool arrangement 3 to a corresponding motor clutch of the kitchen device and one or more blades 9, 10, preferably two, that are usually connected to each other through connectors 4 (cf. Fig. 5) made of the same material. The connectors are also used as additional means of attachment of blades 9, 10 to the clutch 2.

Notches 11 and protrusions 12 are preferably stamped into the starting blade by using an apparatus that presses the edge of the blade between two complementary pressing blocks resulting in preferably periodical concave and convex deformations of the blade 9 (cf. Fig. 4). This results in a formation of a corrugated-like edge 13 of the blade 9. The process of producing the blade 9 also preferably includes the step of bending the front portion 5 of the blade 9 in the width of up to 20 mm, preferably of 3 - 10 mm (cf. Fig. 4) and by an angle that results in a sufficient displacement of the corrugated edge 13 to allow grinding in a plane parallel to the original plane of the blade 9. This results in a keen cutting edge 7 of the wavy blade 9. The angle of bending is preferably 1 ° - 20° and the plane of grinding is preferably 0.5 - 4 mm removed from the original plane of the blade 9.

The grinding of the blade 9 can also be performed at angles in relation to the original plane of the blade 9, preferably, between -12° and 12°. The grinding tool should at all times remain substantially parallel to the general contour of the cutting edge 7 disregarding waves.

The above described process of pressing and grinding of the blade may result in a continuous wavy form of the blade 9 without sharp teeth, or on the other hand with repeated sections of waves ending in sharp edges at both ends. This depends on the selection of the shape of notches 11 and protrusions 12 as well as the angles of bending and grinding. A preferred embodiment according to this invention is a continuous wavy form of the blade 9 that proved most beneficial in testing of the food processing. However, this embodiment does not in any way exclude other possible embodiments including embodiments comprising sharp teeth as described above, irregular wavelengths or any combination of the above described features.

The process can readily be adapted to produce blades 9, 10 that are not of the same design, for example two wavy blades 9, 10 with different length-to-depth ratios of the waves or different angles and planes of bending and grinding of the blade 9. Another option is to choose whether each blade 9, 10 will have the ground surface oriented upwards or downwards when positioned in the food processor. The use of such combinations of blades 9, 10 may prove beneficial for the efficiency or sustainability of processing of certain food types.

Fig. 3 shows the wavy blade 9 according to one embodiment, preferably has a length-to-depth ratio (x:y) of the waves between 3:1 and 20:1, even more preferably between 5:1 and 10:1. These ratios proved to be the most efficient in processing various types of food. The possible benefits of these ratios are in the angles in which the blade 9 contacts the food being processed during rotation inside the food processor. In the preferred embodiment with a continuous wavy form of the blade 9 with the length-to-depth ratio of the waves between 5:1 and 10:1, the angles of contact with the food are never 0° or 90°. In our assessment, the most efficient angles are between 10°. and 70° since this allows food to be sliced instead of cut at a right angle (90°). The latter increases the required force and therefore wear of the blade 9. On the other hand, food may not be cut at all (0°). Furthermore, the angles of contact of the blade 9 with the food are well distributed across the whole range of angles between the minimum and maximum angle of the individual blade 9 design. This results in better processing as different fractions of the food being processed (for example: leaves and stalks of parsley with different sizes of plants) generally require different forces and angles of cutting for optimal processing. Another aspect that must be considered is the length of the waves. The length of the waves is preferably between 5 and 10 mm. This length is believed to avoid the problems with shorter lengths which cause an increased tendency towards shredding or chopping the processed food instead of slicing it and also the problems with larger lengths, which result in spatial constrictions regarding how to fit the whole waves onto the ground surface as amplitudes are increasingly higher.

Additionally, the blade tool arrangement 3 includes at least one aperture 1 in at least one of the blades 9, 10 that is preferentially of triangular or rectangular design with rounded edges. These apertures 1 are added as the means to facilitate positioning during the production of the cutting blade 9 as well as optionally for the positioning of the blade 9 or of the blade tool arrangement 3 during the production of the blade or during food processing. They may also be used as means of reducing the weight of the blade 9, reducing material consumption, increasing flexibility, increasing rotational stability, reducing vibrations and similar.

Fig. 5 shows one embodiment of the blade tool arrangement in accordance with the present invention. The blade tool arrangement 3 according to this invention comprises blades 9, 10 that have planar grindable surfaces 6 at the front portion 5 of the blade in the direction of rotation 14. These planar grindable surfaces 6 enable the end user to easily re-sharpen the blades 9, 10 using basic grinding tools. The planar grindable surfaces 6 can be completely flat or optionally slightly curved provided that the curvature is not of the degree that would prevent re-sharpening of the blades 9, 10 using basic grinding tools.

The blade tool arrangement is intended for use in food processing machines, kitchen devices or similar appliances.

## Claims

1. Blade tool arrangement (3) for a motor driven kitchen device adapted to be rotationally driven, comprising:
- a clutch (2) adapted to couple the blade tool arrangement (3) to a corresponding motor clutch of the kitchen device
- at least one blade (9, 10), each of the at least one blade (9, 10) comprising a wavy shaped cutting edge (7, 8) arranged towards the rotation direction (14) of the motor;
**characterized in that,** each of the at least one blade (9, 10) is bent by 1° - 20° in the width of up to 20 mm, preferably 3 - 10 mm to one side from the original plane of the blade (9, 10) in its front portion (5) which includes the cutting edge (7, 8), the bent front portion (5) having been sharpened into a planar grindable surface (6) resulting in the wavy shaped cutting edge (7, 8), the plane of the grindable surface (6) being at an angle of between -12° and 12° in relation to the original plane of the blade (9,10), wherein said grindable surface (6) is implemented in such a way that re-sharpening of the cutting edge (7, 8) by a user of the kitchen device is allowed.

2. The blade tool arrangement according to claim 1, wherein the grinding surface (6) is planar or substantially planar in order to allow re-sharpening of the blade (9, 10) using a flat grinding tool.

3. The blade tool arrangement according to any of the preceding claims, wherein the basic form of each blade (9, 10) is such that it is skewed backwards in relation to the direction of rotation (14) and is becoming narrower with increasing distance from the center of rotation.

4. The blade tool arrangement according to any of the preceding claims, wherein the plane of the grindable surface (6) is parallel but different to the original plane of the blade (9, 10), the plane of grindable surface (6) being preferably at a distance of 0.5 - 4 mm from the original plane of the blade (9, 10), which results in the sharpening of the bent front portion (5) of the blade (9, 10).

5. The blade tool arrangement according to any of the preceding claims, wherein the length-to-depth ratio of the waves, calculated as the ratio of the length of each wave x to the depth of the wave y defined as the distance from the outermost part of the wave to the innermost part of the wave in relation to the curved general axis of each blade (9, 10) is between 3:1 and 20:1, preferably between 5:1 and 10:1.

6. The blade tool arrangement according to any of the preceding claims, wherein each blade (9, 10) can have different length-to-depth ratios (x:y) of the waves, different widths and angles of bending the front portion (5) of the blade (9, 10), different angles and planes of grinding, and/or an optional upward or downward orientation of the grindable surface (6).

7. The blade tool arrangement according to any of the preceding claims, **characterized in that** the pressing and grinding angles during production are selected in the ranges that result in optimal cutting angles that is angles at which the cutting edge (7, 8) of the blade (9, 10) contacts the food in the processor, within a continuous range between 10° and 70°.

8. The blade tool arrangement according to any of the preceding claims, **characterized in that** at least one of the blades (9, 10) includes one or more apertures (1).

9. The blade tool arrangement according to claim 8, **characterized in that** the apertures (1) are completely within the part of the blade (9, 10) that is not bent and at the distance between the clutch (2) and the closest edge of the closest aperture (1) is between 1 and 15 mm.

10. The blade tool arrangement according to claims 8-9, **characterized in that** the aperture (1) or apertures cover not more than 15% of the surface area of each blade (9, 10).

11. The blade tool arrangement according to claim 8-10, **characterized in that** the apertures (1) are either different in number and/or position and/or not all of the same shape in order to allow unambiguous positioning of the blade tool (3) or part thereof during production or operation.

12. The blade tool arrangement according to claims 8-11, **characterized in that** the apertures (1) are of triangular or rectangular design, preferably with rounded edges.

13. The use of the blade tool according to any of the preceding claims for processing food in a kitchen device, food processing machine or similar appliance.

## Patentansprüche

1. Klingenwerkzeuganordnung (3) für ein motorgetriebenes Küchengerät, das dafür ausgelegt ist, drehangetrieben zu werden, umfassend:
- eine Kupplung (2), die dafür ausgelegt ist, die Klingenwerkzeuganordnung (3) mit einer entsprechenden Motorkupplung des Küchengerätes zu koppeln,
- wenigstens eine Klinge (9, 10), wobei jede der wenigstens einen Klinge (9, 10) eine wellenförmige Schneide (7, 8) aufweist, die der Drehrichtung (14) des Motors zugewandt angeordnet ist;
**dadurch gekennzeichnet, dass** jede der wenigstens einen Klinge (9, 10) in ihrem vorderen Abschnitt (5), welcher die Schneide (7, 8) aufweist, in der Breite von bis zu 20 mm, vorzugsweise von 3 - 10 mm, um 1° - 20° aus der ursprünglichen Ebene der Klinge (9, 10) zu einer Seite gebogen ist, wobei der gebogene vordere Abschnitt (5) zu einer ebenen schleifbaren Fläche (6) geschärft worden ist, aus der die wellenförmige Schneide (7, 8) resultiert, wobei die Ebene der schleifbaren Fläche (6) unter einem Winkel zwischen -12° und 12° bezüglich der ursprünglichen Ebene der Klinge (9, 10) angeordnet ist, wobei die schleifbare Fläche (6) auf eine solche Weise implementiert ist, dass ein Nachschärfen der Schneide (7, 8) durch einen Benutzer des Küchengerätes ermöglicht wird.

2. Klingenwerkzeuganordnung nach Anspruch 1, wobei die Schleiffläche (6) eben oder im Wesentlichen eben ist, um ein Nachschärfen der Klinge (9, 10) mithilfe eines flachen Schleifwerkzeugs zu ermöglichen.

3. Klingenwerkzeuganordnung nach einem der vorhergehenden Ansprüche, wobei die Grundform jeder Klinge (9, 10) so beschaffen ist, dass sie bezüglich der Drehrichtung (14) nach hinten verdreht ist und mit zunehmendem Abstand von Drehmittelpunkt schmaler wird.

4. Klingenwerkzeuganordnung nach einem der vorhergehenden Ansprüche, wobei die Ebene der schleifbaren Fläche (6) parallel zu, jedoch verschieden von der ursprünglichen Ebene der Klinge (9, 10) ist, wobei die Ebene der schleifbaren Fläche (6) vorzugsweise in einem Abstand von 0,5 - 4 mm von der ursprünglichen Ebene der Klinge (9, 10) angeordnet ist, was das Schärfen des gebogenen vorderen Abschnitts (5) der Klinge (9, 10) zur Folge hat.

5. Klingenwerkzeuganordnung nach einem der vorhergehenden Ansprüche, wobei das Verhältnis von Länge zu Tiefe der Wellen, berechnet als das Verhältnis der Länge x jeder Welle zur Tiefe y jeder Welle, die als der Abstand vom äußersten Teil der Welle zum innersten Teil der Welle bezüglich der gekrümmten Hauptachse jeder Klinge (9, 10) definiert ist, zwischen 3:1 und 20:1, vorzugsweise zwischen 5:1 und 10:1 liegt.

6. Klingenwerkzeuganordnung nach einem der vorhergehenden Ansprüche, wobei die einzelnen Klingen (9, 10) verschiedene Verhältnisse von Länge zu Tiefe (x:y) der Wellen, verschiedene Breiten und Winkel der Biegung des vorderen Abschnitts (5) der Klinge (9, 10), verschiedene Winkel und Ebenen des Schleifens und/oder eine optionale Aufwärts- oder Abwärtsausrichtung der schleifbaren Fläche (6) aufweisen können.

7. Klingenwerkzeuganordnung nach einem der vorhergehenden Ansprüche, **dadurch gekennzeichnet, dass** die Druck- und Schleifwinkel während der Produktion in den Bereichen gewählt werden, welche optimale Schneidwinkel zur Folge haben, das heißt Winkel, bei welchen die Schneide (7, 8) der Klinge (9, 10) mit den Lebensmitteln in der Verarbeitungseinheit innerhalb eines kontinuierlichen Bereichs zwischen 10° und 70° in Kontakt kommt.

8. Klingenwerkzeuganordnung nach einem der vorhergehenden Ansprüche, **dadurch gekennzeichnet, dass** wenigstens eine der Klingen (9, 10) eine oder mehrere Öffnungen (1) aufweist.

9. Klingenwerkzeuganordnung nach Anspruch 8, **dadurch gekennzeichnet, dass** sich die Öffnungen (1) vollständig innerhalb des Teils der Klinge (9, 10) befinden, welcher nicht gebogen ist, und dass der Abstand zwischen der Kupplung (2) und dem nächsten Rand der nächsten Öffnung (1) zwischen 1 und 15 mm beträgt.

10. Klingenwerkzeuganordnung nach den Ansprüchen 8-9, **dadurch gekennzeichnet, dass** die Öffnung (1) oder die Öffnungen nicht mehr als 15 % des Oberflächenbereichs jeder Klinge (9, 10) bedecken.

11. Klingenwerkzeuganordnung nach den Ansprüchen 8-10, **dadurch gekennzeichnet, dass** die Öffnungen (1) entweder in der Anzahl und/oder der Position verschieden sind und/oder nicht alle von derselben Form sind, um eine eindeutige Positionierung des Klingenwerkzeugs (3) oder Teils desselben während der Produktion oder des Betriebs zu ermöglichen.

12. Klingenwerkzeuganordnung nach den Ansprüchen 8-11, **dadurch gekennzeichnet, dass** die Öffnungen (1) von dreieckiger oder rechteckiger Gestalt sind, vorzugsweise mit abgerundeten Rändern.

13. Verwendung des Klingenwerkzeugs nach einem der vorhergehenden Ansprüche zum Verarbeiten von Lebensmitteln in einem Küchengerät, einer Lebensmittelverarbeitungsmaschine oder einem ähnlichen Gerät.

## Revendications

1. Agencement (3) d'outil à lames pour un dispositif culinaire motorisé adapté à être entraîné en rotation, comprenant :
- un embrayage (2) adapté à coupler l'agencement (3) d'outil à lames à un embrayage correspondant de moteur du dispositif culinaire
- au moins une lame (9, 10), chacune de l'au moins une lame (9, 10) comprenant un bord de coupe (7, 8) de forme ondulée agencé vers le sens de rotation (14) du moteur ;
**caractérisé en ce que** chacune de l'au moins une lame (9, 10) est courbée de 1 à 20° dans la largeur jusqu'à 20 mm, préférablement 3 à 10 mm vers un côté par rapport au plan d'origine de la lame (9, 10) dans sa partie avant (5) qui inclut le bord de coupe (7, 8), la partie avant (5) courbée ayant été affûtée en une surface rectifiable (6) plane résultant en le bord de coupe (7, 8) de forme ondulée, le plan de la surface rectifiable (6) étant à un angle d'entre -12° et 12° par rapport au plan d'origine de la lame (9, 10), dans lequel ladite surface rectifiable (6) est mise en oeuvre de telle manière qu'un réaffûtage du bord de coupe (7, 8) par un utilisateur du dispositif culinaire est possible.

2. Agencement d'outil à lames selon la revendication 1, dans lequel la surface de rectification (6) est plane ou sensiblement plane afin de permettre le réaffûtage de la lame (9, 10) en utilisant un outil de rectification plat.

3. Agencement d'outil à lames selon l'une quelconque des revendications précédentes, dans lequel la forme de base de chaque lame (9, 10) est telle qu'elle est oblique vers l'arrière par rapport au sens de rotation (14) et devient plus étroite alors que la distance augmente par rapport au centre de rotation.

4. Agencement d'outil à lames selon l'une quelconque des revendications précédentes, dans lequel le plan de la surface rectifiable (6) est parallèle au mais différent du plan d'origine de la lame (9, 10), le plan de la surface rectifiable (6) étant préférablement à une distance de 0,5 à 4 mm du plan d'origine de la lame (9, 10), ce qui résulte en l'affûtage de la partie avant (5) courbée de la lame (9, 10).

5. Agencement d'outil à lames selon l'une quelconque des revendications précédentes, dans lequel le rapport de la longueur sur la profondeur des ondulations, calculé comme le rapport de la longueur de chaque ondulation x sur la profondeur de l'ondulation y défini comme la distance de la partie la plus extérieure de l'ondulation jusqu'à la partie la plus intérieure de l'ondulation par rapport à l'axe général de courbure de chaque lame (9, 10) est entre 3:1 et 20:1, préférablement entre 5:1 et 10:1.

6. Agencement d'outil à lames selon l'une quelconque des revendications précédentes, dans lequel chaque lame (9, 10) peut avoir différents rapports (x:y) de la longueur sur la profondeur des ondulations, différentes largeurs et différents angles de courbure de la partie avant (5) de la lame (9, 10), différents angles et plans de rectification, et/ou une orientation facultative vers le haut ou vers le bas de la surface rectifiable (6).

7. Agencement d'outil à lames selon l'une quelconque des revendications précédentes, **caractérisé en ce que** le pressage et la rectification d'angles lors de la production sont choisis dans les plages qui résultent en des angles de coupe optimaux, à savoir des angles auxquels le bord de coupe (7, 8) de la lame (9, 10) entre en contact avec l'aliment dans l'appareil, à l'intérieur d'une plage continue entre 10° et 70°.

8. Agencement d'outil à lames selon l'une quelconque des revendications précédentes, **caractérisé en ce qu'**au moins une des lames (9, 10) inclut une ou plusieurs ouverture(s) (1).

9. Agencement d'outil à lames selon la revendication 8, **caractérisé en ce que** les ouvertures (1) sont complètement à l'intérieur de la partie de la lame (9, 10) qui n'est pas courbée et la distance entre l'embrayage (2) et le bord le plus proche de l'ouverture (1) la plus proche est entre 1 et 15 mm.

10. Agencement d'outil à lames selon les revendications 8 à 9, **caractérisé en ce que** l'ouverture (1) ou les ouvertures ne recouvre(nt) pas plus de 15% de la superficie de chaque lame (9, 10).

11. Agencement d'outil à lames selon les revendications 8 à 10, **caractérisé en ce que** les ouvertures (1) sont différentes en nombre et/ou en position et/ou ne sont pas toutes de la même forme afin de permettre un positionnement non ambigu de l'outil (3) à lames ou d'une partie de celui-ci lors de la production ou du fonctionnement.

12. Agencement d'outil à lames selon les revendications 8 à 11, **caractérisé en ce que** les ouvertures (1) sont de conception triangulaire ou rectangulaire, préférablement avec des bords arrondis.

13. Utilisation de l'outil à lames selon l'une quelconque des revendications précédentes pour préparer un aliment dans un dispositif culinaire, une machine de préparation culinaire ou un appareil similaire.
